(19) Europäisches Patentamt
European Patent Office
Office européen des brevets

(11) **EP 2 355 397 A2**

(12) **EUROPEAN PATENT APPLICATION**

(43) Date of publication:
10.08.2011 Bulletin 2011/32

(51) Int Cl.:
*H04L 5/00* (2006.01)

(21) Application number: 11000388.6

(22) Date of filing: 19.01.2011

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 20.01.2010 JP 2010010112

(71) Applicants:
• **NEC Corporation**
**Tokyo 108-8001 (JP)**

• **NTT DOCOMO, INC.**
**Chiyoda-ku**
**Tokyo (JP)**

(72) Inventor: **Takanashi, Mitsunori**
**Tokyo 108-8001 (JP)**

(74) Representative: **Glawe, Delfs, Moll**
**Patent- und Rechtsanwälte**
**Postfach 26 01 62**
**80058 München (DE)**

(54) **Communication device and receiving method**

(57) The present invention provides a communication device and receiving method in which a scale of circuit and power consumption can be reduced. A parameter calculating section 62 calculates parameters with respect to specifying resource blocks (RB) to which a physical downlink shared channel (PDSCH) is mapped. A counter 63 and an interleaver 64 convert a virtual resource block (VRB) number to a physical resource block (PRB) number only by add-subtract calculation, shift operation, and comparison with reference to the calculated parameters. The present invention can be applied to a communication device complying with 3rd Generation Partnership Project (3GPP).

Fig.2

**Description**

Technical Field

The present invention relates to a communication device and a receiving method.

Background Art

In recent years, multiple input multiple output (MIMO) technology making use of multiple antennas as well as orthogonal frequency division multiplexing (OFDM) as a digital modulation method has been developed for further improvement of communication speed in wireless telecommunications, and their use has already started.

In MIMO technology, for example, multiple data are simultaneously transmitted out of multiple antennas for spatial multiplexing, while a receiver side picks up the original multiple data from received data. Since MIMO technology makes it possible to increase the amount of data that can be transmitted at a time, the communication speed can be improved. On the other hand, OFDM is a multiple carrier transmission technology for transmitting data in parallel by using a lot of carrier waves called sub-carriers. Provided with some advantages, such as a high frequency usage efficiency, reduced interference among symbols, and the like, OFDM is known to have a high transmission efficiency. In a sector of mobile telecommunications as well, 3rd Generation Partnership Project (3GPP) currently proceeds with standardization of a new communication method as long term evolution (LTE). OFDM communication system is also adopted in LTE (For example, refer to Non-patent Document 1 and Non-patent Document 2).

Frequency scheduling in OFDM makes it possible to specify which sub-carrier each user data is allocated to. This procedure is called resource allocation. In physical downlink shared channel (PDSCH) defined in 3GPP, 12 sub-carriers are allocated as one unit in manner of resource block (RB). Then, a result of the resource allocation is reported to a mobile station by means of downlink control information (DCI).

Prepared in 3GPP are 3 methods for specifying a resource allocation; namely, Type0, Type1, and Type2. In Type0, a resource allocation is specified for each Resource Block Group (RBG) as one group having a plurality of RBs. In Type1, specified is a sub-set, called an RBG sub-set, including a plurality of RBGs; and it is then specified which RB in the sub-set the PDSCH is allocated to. In Type2, an allocation is specified with a resource indication value (RIV) including an RB number for a start of allocation and the number of allocations. Relationships among the RIV, the $RB_{start}$ as the RB number for a start of allocation, and the $L_{CRBs}$, as the number of allocations are expressed as Formula 1 shows below;

$$\text{if } (L_{CRBs}-1) \le \left\lfloor N_{RB}^{DL} / 2 \right\rfloor \text{ then}$$

$$RIV = N_{RB}^{DL}(L_{CRBs}-1) + RB_{start}$$

$$\text{else}$$

$$RIV = N_{RB}^{DL}(N_{RB}^{DL} - L_{CRBs}+1) + (N_{RB}^{DL} - 1 - RB_{start})$$

$$\dots\dots(1)$$

wherein "$L_{CRBS}$" is 1 or greater, and a sum of "$L_{CRBs}$" and "$RB_{start}$" does not exceed the size of a Virtual Resource Block (VRB).

Such a VRB is an RB that is a basis for a physical resource block (PRB) to be transmitted through a channel. A PDSCH is mapped to VRBs at first, and then mapped to PRBs. There are two types of VRBs, that is, Localized VRB (LVRB) and Distributed VRB (DVRB), and it is reported which VRB is used to the receiver side by means of the DCI. An LVRB is mapped, as it is, to a PRB; and on the other hand, a DVRB is to be distributed to a plurality of PRBs and mapped. Details of the distribution algorithm are as described below:

A parameter $N_{GAP}$ is determined according to the system bandwidth, as shown in Table 1 below:

Table 1

| System BW $( N_{RB}^{DL} )$ | Gap ($N_{gap}$) | |
|---|---|---|
| | 1st Gap ($N_{gap,1}$) | 2nd Gap ($N_{gap,2}$) |
| 6-10 | $\lceil N_{RB}^{DL} /2 \rceil$ | N/A |
| 11 | 4 | N/A |
| 12-19 | 8 | N/A |
| 20-26 | 12 | N/A |
| 27-44 | 18 | N/A |
| 45-49 | 27 | N/A |
| 50-63 | 27 | 9 |
| 64-79 | 32 | 16 |
| 80-110 | 48 | 16 |

In the case of a system bandwidth being 49RB or less, only 1st GAP ($N_{GAP,1}$) is selected for the NGAP. Meanwhile, in the case of a system bandwidth being 50RB or greater, one of 1st GAP ($N_{GAP,1}$) and 2nd GAP ($N_{GAP,2}$) is selected by means of the DCI. A maximum value of the VRB is calculated according to the formula (2) and the formula (3) for the 1st GAP and the 2nd GAP, respectively.

$$N_{VRB}^{DL} = N_{VRB, gap1}^{DL} = 2 \cdot \min ( N_{gap}, N_{RB}^{DL} - N_{gap} )$$

$$\qquad\qquad\qquad ......(2)$$

$$N_{VRB}^{DL} = N_{VRB, gap2}^{DL} = \lfloor N_{RB}^{DL} / 2N_{gap} \rfloor \cdot 2N_{gap}$$

$$\qquad\qquad\qquad ......(3)$$

A successive VRB number to be used for a VRB number interleaver is calculated according to the formula (4) and the formula (5) for the 1st GAP and the 2nd GAP, respectively.

$$\tilde{N}_{VRB}^{DL} = N_{VRB}^{DL}$$

$$\qquad\qquad\qquad ......(4)$$

$$\widetilde{N}\,^{\mathrm{DL}}_{\mathrm{VRB}} = 2N_{\mathrm{gap}}$$

$$......(5)$$

By using the formulas (2) to (5), the interleaver count is eventually calculated according to the formula (6).
$$N_{\mathrm{INT}} = N\,^{\mathrm{DL}}_{\mathrm{VRB}} \,/\, \widetilde{N}\,^{\mathrm{DL}}_{\mathrm{VRB}}$$

$$......(6)$$

The number of columns in an interleave matrix to be used in each interleaver is 4 on a constant basis, and then the number of rows is calculated according to the formula (7).
$$N_{\mathrm{row}} = \left\lceil \widetilde{N}\,^{\mathrm{DL}}_{\mathrm{VRB}} /(4P) \right\rceil \cdot P$$

$$......(7)$$

wherein "P" stands for the size of an RBG, which is defined as Table 2 shows below.
Table 2

| System Bandwidth $N\,^{\mathrm{DL}}_{\mathrm{RB}}$ | RBG Size (P) |
|---|---|
| ≤10 | 1 |
| 11-26 | 2 |
| 27-63 | 3 |
| 64-110 | 4 |

VRB numbers are written in a row direction of the interleave matrix, and read out in a column direction. $N_{\mathrm{NULL}}$ is inserted in the last $N_{\mathrm{NULL}}/2$ row of the 2nd and 4th columns. $N_{\mathrm{NULL}}$ is calculated according to the formula (8).
$$N_{\mathrm{null}} = 4N_{\mathrm{row}} - \widetilde{N}\,^{\mathrm{DL}}_{\mathrm{VRB}}$$

$$......(8)$$

$N_{\mathrm{NULL}}$ is ignored when being read out.
In the case of a slot number ns being an even number, a result of interleaving is calculated according to the formula (9).
$$\tilde{n}_{\mathrm{PRB}}(n_{\mathrm{s}})=\begin{cases}\tilde{n}'_{\mathrm{PRB}}-N_{\mathrm{row}} & ,N_{\mathrm{null}}\neq 0 \ \mathrm{and}\ \tilde{n}_{\mathrm{VRB}}\geq\tilde{N}^{\mathrm{DL}}_{\mathrm{VRB}}-N_{\mathrm{null}}\ \mathrm{and}\ \tilde{n}_{\mathrm{VRB}}\bmod 2=1\\ \tilde{n}'_{\mathrm{PRB}}-N_{\mathrm{row}}+N_{\mathrm{null}}/2 & ,N_{\mathrm{null}}\neq 0 \ \mathrm{and}\ \tilde{n}_{\mathrm{VRB}}\geq\tilde{N}^{\mathrm{DL}}_{\mathrm{VRB}}-N_{\mathrm{null}}\ \mathrm{and}\ \tilde{n}_{\mathrm{VRB}}\bmod 2=0\\ \tilde{n}''_{\mathrm{PRB}}-N_{\mathrm{null}}/2 & ,N_{\mathrm{null}}\neq 0 \ \mathrm{and}\ \tilde{n}_{\mathrm{VRB}}<\tilde{N}^{\mathrm{DL}}_{\mathrm{VRB}}-N_{\mathrm{null}}\ \mathrm{and}\ \tilde{n}_{\mathrm{VRB}}\bmod 4\geq 2\\ \tilde{n}''_{\mathrm{PRB}} & ,\mathrm{otherwise}\end{cases}$$

where $\tilde{n}'_{\mathrm{PRB}}=2N_{\mathrm{row}}\cdot(\tilde{n}_{\mathrm{VRB}}\bmod 2)+\lfloor\tilde{n}_{\mathrm{VRB}}/2\rfloor+\tilde{N}^{\mathrm{DL}}_{\mathrm{VRB}}\cdot\lfloor n_{\mathrm{VRB}}/\tilde{N}^{\mathrm{DL}}_{\mathrm{VRB}}\rfloor$,

and $\tilde{n}''_{\mathrm{PRB}}=N_{\mathrm{row}}\cdot(\tilde{n}_{\mathrm{VRB}}\bmod 4)+\lfloor\tilde{n}_{\mathrm{VRB}}/4\rfloor+\tilde{N}^{\mathrm{DL}}_{\mathrm{VRB}}\cdot\lfloor n_{\mathrm{VRB}}/\tilde{N}^{\mathrm{DL}}_{\mathrm{VRB}}\rfloor$,

where $\tilde{n}_{\mathrm{VRB}}=n_{\mathrm{VRB}}\bmod\tilde{N}^{\mathrm{DL}}_{\mathrm{VRB}}$

$$......(9)$$

wherein "n$_{\mathrm{VRB}}$" indicates a VRB number. In the case of a slot number ns being an odd number, a result of interleaving is calculated according to the formula (10).

$$\tilde{n}_{\mathrm{PRB}}(n_{\mathrm{s}})=\left(\tilde{n}_{\mathrm{PRB}}(n_{\mathrm{s}}-1)+\tilde{N}^{\mathrm{DL}}_{\mathrm{VRB}}/2\right)\bmod\tilde{N}^{\mathrm{DL}}_{\mathrm{VRB}}+\tilde{N}^{\mathrm{DL}}_{\mathrm{VRB}}\cdot\lfloor n_{\mathrm{VRB}}/\tilde{N}^{\mathrm{DL}}_{\mathrm{VRB}}\rfloor$$

$$......(10)$$

In the end, the PRB number "n$_{\mathrm{PRB}}$" corresponding to the VRB number is calculated according to the formula (11).

$$n_{\mathrm{PRB}}(n_{\mathrm{s}})=\begin{cases}\tilde{n}_{\mathrm{PRB}}(n_{\mathrm{s}}) & ,\tilde{n}_{\mathrm{PRB}}(n_{\mathrm{s}})<\tilde{N}^{\mathrm{DL}}_{\mathrm{VRB}}/2\\ \tilde{n}_{\mathrm{PRB}}(n_{\mathrm{s}})+N_{\mathrm{gap}}-\tilde{N}^{\mathrm{DL}}_{\mathrm{VRB}}/2 & ,\tilde{n}_{\mathrm{PRB}}(n_{\mathrm{s}})\geq\tilde{N}^{\mathrm{DL}}_{\mathrm{VRB}}/2\end{cases}$$

$$......(11)$$

[Related Art]
Non-patent Document 1: 3GPP TS36. 211
Non-patent Document 2: 3GPP TS36. 213

Disclosure of Invention

Unfortunately in the past, an allocation position has been specified through calculation of the resource block allocation formulas defined by 3GPP so that the circuit size has unavoidably become great.

In other words, when DVRB is selected in such a way as described above, various calculations are required for obtaining PRB. For multiplication, division, and residual calculation in particular, the circuit size becomes so great that power consumption for those calculations inevitably increases. Therefore, those calculations are not adequate for a mobile station such as a cellular phone.

Thus, it is an object of the present invention to find a solution to the above issue; in other words, to detect PRB numbers corresponding to VRB numbers without using multiplication, division, and residual calculation of the formulas (9) to (11) so as to downsize the circuit, for providing a communication device, a receiving method, and a program with which the power consumption can be reduced much further.

To achieve the object described above, an aspect of the present invention is that; a communication device for resource allocation complying with 3rd Generation Partnership Project (3GPP), includes: calculating means for calculating parameters with respect to specifying resource blocks (RB) to which a physical downlink shared channel (PDSCH) is mapped; and converting means for converting virtual resource block (VRB) numbers to physical resource block (PRB) numbers only by add-subtract calculation, shift operation, and comparison with reference to the parameters calculated.

In addition to the configuration described above, the communication device according to the present invention may further include that; the calculating means calculates a resource block (RB) gap value, a VRB count, a successive VRB number, an interleaver count, and the number of rows of an interleave matrix; and the converting means converts a VRB number to a PRB number by applying only add-subtract calculation, shift operation, and comparison calculation onto the RB gap value, the VRB count, the successive VRB number, the interleaver count, and the number of rows of the interleave matrix.

Another aspect of the present invention is that; a communication method of a communication device for resource allocation complying with 3GPP, includes: a calculation step for calculating parameters with respect to specifying RBs to which a PDSCH is mapped; and a conversion step for converting VRB numbers to PRB numbers only by add-subtract calculation, shift operation, and comparison with reference to the parameters calculated.

Further aspect of the present invention is that; a program for having a computer control a communication device for resource allocation complying with 3GPP, includes: a calculation step for calculating parameters with respect to specifying RBs to which a PDSCH is mapped; and a conversion step for converting VRB numbers to PRB numbers only by add-subtract calculation, shift operation, and comparison with reference to the parameters calculated.

According to the present invention, there are provided a communication device, a receiving method, and a program with which the circuit can be downsized so that the power consumption can be reduced.

Brief Description of Drawings

A specific embodiment of the present invention will now be described, by way of example only, with reference to the accompanying drawings in which:

FIG. 1 shows a general configuration illustrating an embodiment of the communication system according to the present invention;

FIG. 2 shows an example of configuration of a demodulator 22;

FIG. 3 shows an example of VRB numbers;

FIG. 4 shows an example of PRB numbers;

FIG. 5 is a flowchart that explains a process of conversion from VRB to PRB;

FIG. 6 is another flowchart that explains a process of conversion from VRB to PRB; and

FIG. 7 is a block diagram showing an example of configuration of computer hardware.

Best Mode for Carrying Out the Invention

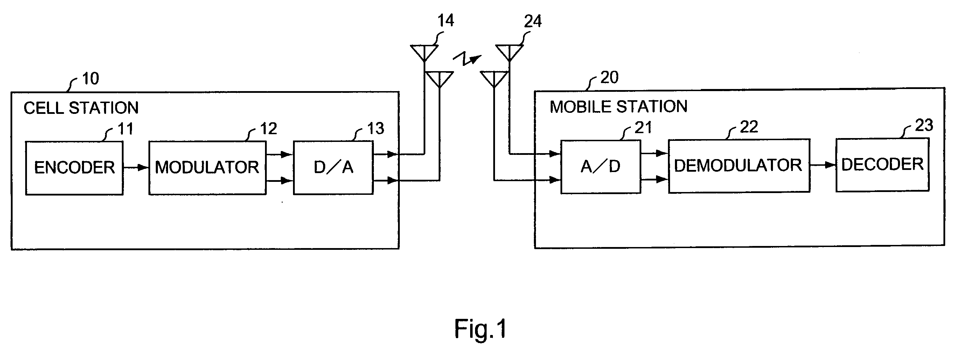

FIG. 1 shows a general configuration illustrating an embodiment of the communication system according to the present invention. As shown in FIG. 1, working at a transmitting side is a cell station 10, for example, which includes an encoder 11, a modulator 12, a digital/analog (D/A) converter 13, and a plurality of antennas 14. On the other hand, working at a receiving side is a mobile station 20, for example, which includes a plurality of antennas 24, an analog/digital (A/D) converter 21, a demodulator 22, and a decoder 23.

At the cell station 10, for example, a central processing unit (CPU) of the cell station 10 (not shown in the drawing) inputs data, to be transmitted as information bit, into the encoder 11. Then, the encoder 11 adds a cyclic redundancy check (CRC) to the information bit that has been input, and carries out turbo coding. The modulator 12 modulates the coded data that has been input, and outputs a plurality of modulated data, which is data as a result of the modulation, to the D/A converter 13. Then, the D/A converter 13 converts digital signals of the modulated data, which has been output from the modulator 12, into analog signals. The modulated data, which has been converted into analog signals, is transmitted through the plurality of antennas 14.

The mobile station 20 receives the modulated data transmitted from the antennas 14 of the cell station 10 by means of the plurality of antennas 24. In the meantime, the modulated data, which the antenna 24 receives, is affected by environmental noise while being transmitted through space after once being output from the antennas 14. Then, the modulated data, which the antenna 24 receives, is input into the A/D converter 21. The A/D converter 21 converts analog signals of the modulated data, which has been input, into digital signals. Then, the A/D converter 21 outputs the digital signals to the demodulator 22. The demodulator 22 demodulates the digital signals output from the A/D converter 21. Then, the demodulator 22 outputs the demodulated data obtained through the demodulation to the decoder 23. The decoder 23 executes a decoding process for correcting errors with respect to the demodulated data that has been input. Then, by using the decoded data obtained as a result of the decoding process, a processing circuit including a CPU described later executes a specified process. Hereinafter, the modulated data transmitted from the cell station of the transmitting side is called "transmitted data", and the digital signals output from the A/D converter 21 of the mobile station 20 of the receiving side are called "received data".

The demodulator 22 of the mobile station 20 specifies physical resource blocks (PRB) of a physical downlink shared channel (PDSCH), to which distributed virtual resource blocks (DVRB) are allocated, without executing any complicated arithmetic processing.

By making use of a minimal required combination of add-subtract calculation, shift operation, and comparison, the demodulator 22 gets a result equivalent to what using the resource block allocation formulas brings.

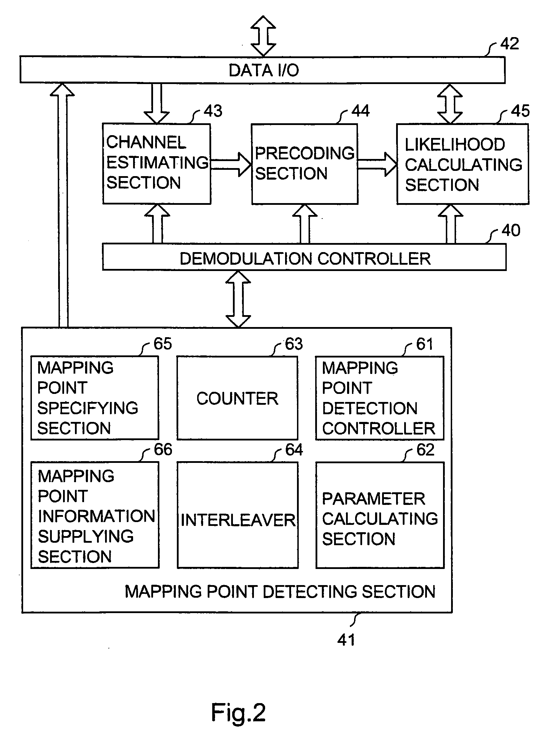

FIG. 2 shows an example of configuration of a demodulator 22. The demodulator 22 is composed of a demodulation controller 40, a mapping point detecting section 41, a data input/output section (DATA I/O) 42, a channel estimating section 43, a pre-coding section 44, and a likelihood calculating section 45.

At first, the demodulation controller 40 sends information about a channel to be demodulated to each block. In the meantime, a setup for the demodulation controller 40 is carried out externally in advance. According to the control information, the mapping point detecting section 41 specifies sub-carriers where the channel is carried. Then, the mapping point detecting section 41 sends the specified information to the data input/output section 42, and receives required data externally (for example, from a memory not shown in the drawing). The channel estimating section 43 estimates the channel according to a reference signal existing in the receive data. If the receive channel is provided with pre-coding, the pre-coding section 44 executes pre-coding on the channel estimation value. The likelihood calculating section 45 carries out soft decision demodulation on the received data. Then, the demodulated result is reported outside through the data input/output section 42.

The mapping point detecting section 41 mainly has two functions; i.e., one function for specifying RBs for which the PDSCH is mapped, according to the received downlink control information (DCI), and the other function for developing information of the specified RBs (hereinafter called "the mapping point information") for the data input/output section 42, as required. The mapping point detecting section 41 has a feature in the function for specifying RBs for which the PDSCH is mapped, according to the DCI.

The mapping point detecting section 41 includes a mapping point detection controller 61, a parameter calculating section 62, a counter 63, an interleaver 64, and a mapping point specifying section 65, and a mapping point information supplying section 66. Incidentally, the mapping point detection controller 61 controls the mapping point detecting section 41 in whole.

The parameter calculating section 62 calculates a parameter that relates to specifying RBs for which the PDSCH is mapped. The counter 63 counts the VRB number, the PRB number, and the like. The interleaver 64 executes interleaving operation. The mapping point specifying section 65 specifies RBs for which the PDSCH is mapped. The mapping point information supplying section 66 supplies the data input/output section 42 with mapping point information indicating the RBs for which the PDSCH is mapped.

Explained in this section with a concrete example is how to specify RBs for which the PDSCH is mapped. In the case where a system bandwidth of 15 RBs (3MHz) is given for an initial slot, an RB gap value can be obtained to be "8" according to Table 1. Then, the VRB count of the DVRB is calculated to be "14" according to Formula 2. The successive VRB number is calculated to be "14" according to Formula 4. The interleaver count is "1" according to Formula 6, and meanwhile the number of rows of the interleave matrix is "4" according to Formula 7.

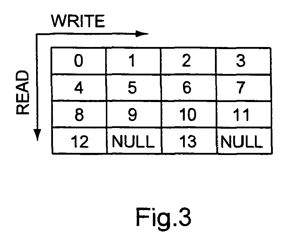

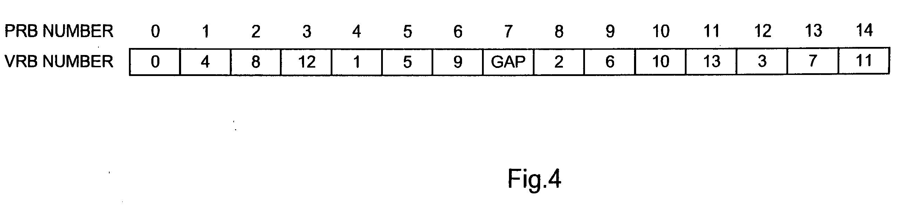

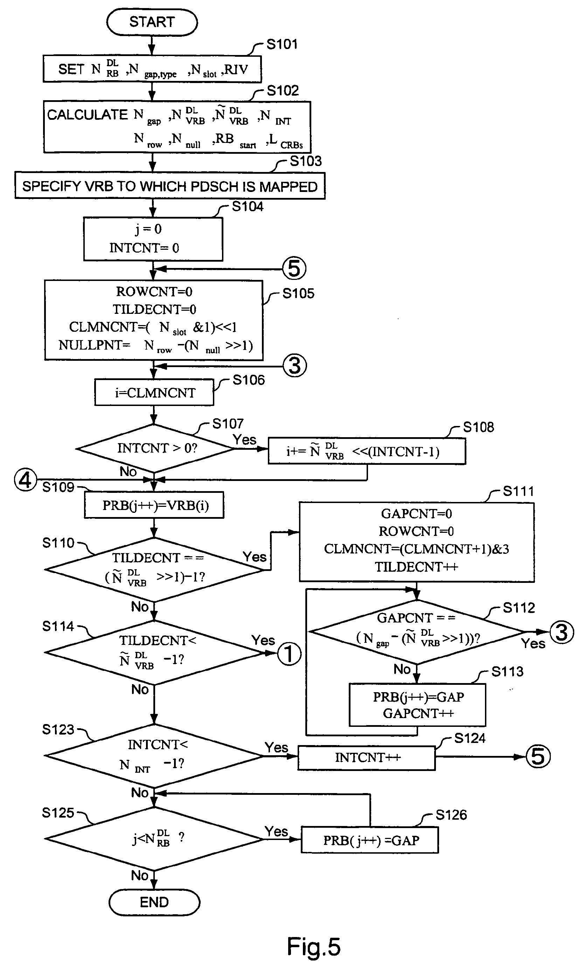

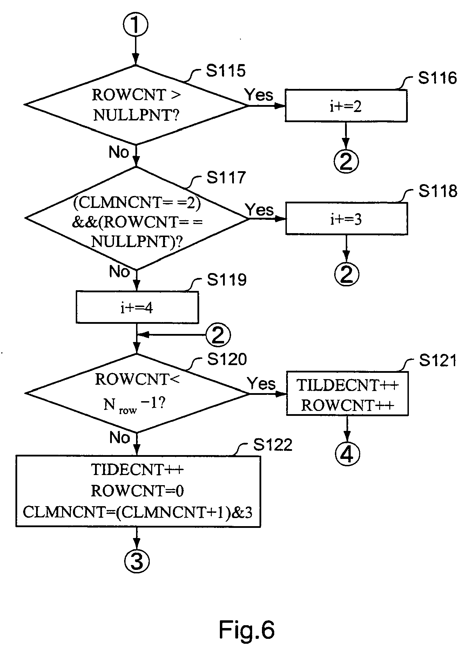

The VRB numbers are written in a row direction as shown in FIG. 3. The $N_{NULL}$ is "2" according to Formula 8. The conversion from the VRBs to PRBs is carried out through a process that is explained with reference to FIG. 5 and FIG. 6. As a result of that, the PRBs are obtained as shown in FIG. 4. Incidentally, "GAP" shown in FIG. 4 is an RB for which no PDSCH is mapped.

Explained next with reference to the flowcharts of FIG. 5 and FIG. 6 is a process of conversion from the VRBs to PRBs. At first, externally reported in Step S101 is control information. Namely, in Step S101, the mapping point detection controller 61 of the mapping point detecting section 41 sets up a system bandwidth, $N_{GAPtype}$, $N_{slot}$, and a resource indication value (RIV). In Step S102, based on the information described above, the calculations of Formula 1 to Formula 8 are carried out. In other words, in Step S102, the parameter calculating section 62 calculates the parameter $N_{GAP}$, the maximum VRB count, the successive VRB number, the interleaver count, the number of rows of the interleave matrix, $N_{null}$, $RB_{start}$, and the number of allocations, through the calculations of Formula 1 to Formula 8.

In Step S103, VRB numbers, for which the PDSCH is mapped, is specified according to the $RB_{start}$, and $L_{CBRs}$, and the PDSCH mapping information is marked. Namely, in Step S103, the mapping point specifying section 65 specifies the VRBs for which the PDSCH is mapped.

In Step S104 and Step S105, the counter 63 is initialized. Namely, in Step S104, the counter 63 gets "0" for a variable "j" and also gets "0" for a variable INTCNT. Then, in Step S105, the counter 63 gets "0" for a variable ROWCNT and also gets "0" for a variable TILDECNT. Furthermore, in Step S105, the counter 63 carries out calculation for an AND operation between $N_{slot}$ and "1", and shifts the calculation result for 1 bit to the left. Then, the value obtained as a result of that is assigned to a variable CLMNCNT. Moreover, in Step S105, the counter 63 subtracts a value, obtained by shifting $N_{null}$ for 1 bit to the right, from the number of rows of the interleave matrix; and then the value obtained as a result of that is assigned to a variable NULLPNT.

In Step S106, an initial VRB number is set. Namely, the interleaver 64 assigns the variable CLMNCNT to a variable "i" indicating the VRB number. In Step S107 and Step S108, if the variable INTCNT is not "0", the initial VRB number is off-set according to the number of interleave operations. In other words, in Step S107, the interleaver 64 judges whether or not the variable INTCNT is greater than "0". If it is judged in Step S107 that the variable INTCNT is greater than "0", operation progresses to Step S108. Then, the interleaver 64 shifts the successive VRB number for a bit count, described with a value obtained by subtracting "1" from the variable INTCNT, to the left; and adds a value obtained as a result to the variable "i". After Step S108, operation progresses to Step S109. In the meantime, if it is judged in Step S107 that the variable INTCNT is not greater than "0", procedures of Step S108 are skipped so that operation progresses to Step S109.

In Step S109, the PDSCH mapping information of the VRB number is copied to the PRB number, and then the PRB number increases by 1. Namely, in Step S109, the interleaver 64 assigns VRB(i) to PRB(j), and then increments the value "j" by 1. Incidentally, "j++" at this step means a calculation of incrementing the value "j" by 1.

In Step S110, it is judged whether or not a half of the required copying operations has already been executed. Namely, in Step S110, the interleaver 64 judges whether or not the variable TILDECNT is equal to a result of subtracting "1" from a value obtained by shifting the successive VRB number for 1 bit to the right.

In Step S111, the counter 63 for inserting GAP is initialized. Namely, if it is judged in Step S110 that the variable TILDECNT is equal to a result of subtracting "1" from a value obtained by shifting the successive VRB number for 1 bit to the right, operation progresses to Step S111. Then, the counter 63 sets a variable GAPCNT with "0", and also sets the variable ROWCNT with "0". Furthermore, in Step S111, the counter 63 calculates an AND operation between a value obtained by adding "1" to the variable CLMNCNT and "3", and then assigns a result of that to the variable CLMNCNT. Moreover, in Step S111, the counter 63 increments the variable TILDECNT by "1". After Step S111, operation progresses to Step S112.

In Step S112, it is judged whether or not the required number of GAP is inserted. In Step S113, a GAP or GAPs are inserted into a PRG of PRGs. Incidentally, each GAP is not mapped with the PDSCH. Then, afterwards the PRB number increases by "1".

Namely, in Step S112, the interleaver 64 judges whether or not the variable GAPCNT is equal to a resulted value of subtracting a value, obtained by shifting the successive VRB number for 1 bit to the right, from the $N_{GAP}$. If it is judged in Step S112 that the variable GAPCNT is not equal to a resulted value of subtracting a value, obtained by shifting the successive VRB number for 1 bit to the right, from the $N_{GAP}$, operation progresses to Step S113. Then, the interleaver 64 assigns the variable GAP to PRB(j). Furthermore, in Step S113, the interleaver 64 increments the variable GAPCNT by 1. After Step S113, operation returns to Step S112. On the other hand, if it is judged in Step S112 that the variable GAPCNT is equal to a resulted value of subtracting a value, obtained by shifting the successive VRB number for 1 bit to the right, from the $N_{GAP}$, operation progresses to Step S106.

If it is judged in Step S110 that the variable TILDECNT is not equal to a result of subtracting "1" from a value obtained by shifting the successive VRB number for 1 bit to the right, operation progresses to Step S114.

In Step S114, it is judged whether or not the required copying operations have already been executed. If the number of the required copying operations is not yet satisfied, a following operation of interleave processing is still carried out. Namely, in Step S114, the interleaver 64 judges whether or not the variable TILDECNT is less than a result of subtracting "1" from the successive VRB number.

In Step S114, if it is judged that the variable TILDECNT is less than a result of subtracting "1" from the successive VRB number, operation progresses to Step S115.

In Step S115 and Step S116, if the count of rows, that is the variable ROWCNT, is greater than the variable NULLPNT, "2" is added to the VRB number. Namely, in Step S115, the interleaver 64 judges whether or not the variable ROWCNT is greater than the variable NULLPNT. If it is judged in Step S115 that the variable ROWCNT is greater than the variable NULLPNT, operation progresses to Step S116; and then the interleaver 64 adds "2" to the variable "i", and operation progresses to Step S120.

In Step S115, if it is judged that the variable ROWCNT is not greater than the variable NULLPNT, operation progresses to Step S117.

In Step S117 and Step S118, if the count of columns, that is the variable COLCNT, is "2" and the count of rows, that is the variable ROWCNT, is equal to the variable NULLPNT, "3" is added to the VRB number. If not, "4" is added to the VRB number. Namely, in Step S117, the interleaver 64 judges whether or not the variable CLMNCNT is equal to "2" and the variable ROWCNT is equal to the variable NULLPNT. If it is judged in Step S117 that the variable CLMNCNT is equal to "2" and the variable ROWCNT is equal to the variable NULLPNT, operation progresses to Step S118; and then the interleaver 64 adds "3" to the variable "i", and operation progresses to Step S120.

In Step S117, if it is judged that either the variable CLMNCNT is not equal to "2", or the variable ROWCNT is not equal to the variable NULLPNT, operation progresses to Step S119. In Step S119, then the interleaver 64 adds "4" to the variable "i", and operation progresses to Step S120.

In Step S120 and Step S121, if the count of rows does not reach a specified number, the count of rows increases by "1"' If it does reach the specified number in Step S120, the count of rows is initialized and the count of columns increases by "1".

Namely, in Step S120, the interleaver 64 judges whether or not the variable ROWCNT is less than a resulted value of subtracting "1" from the number of rows of the interleave matrix. If it is judged in Step S120 that the variable ROWCNT is less than a resulted value of subtracting "1" from the number of rows of the interleave matrix, operation progresses to Step S121. The counter 63 increments the variable TILDECNT by "1", also increments the variable ROWCNT by "1", and then operation progresses to Step S109.

If it is judged in Step S120 that the variable ROWCNT is not less than a resulted value of subtracting "1" from the number of rows of the interleave matrix, operation progresses to Step S122.

In Step S122, the counter 63 increments the variable TILDECNT by "1", sets the variable ROWCNT with "0"; calculates an AND operation between a resulted value of adding "1" to the variable CLMNCNT and "3"; and then assigns a result of the AND operation to the variable CLMNCNT. After Step S122, operation progresses to Step S106.

In Step S114, if it is judged that the variable TILDECNT is not less than a result of subtracting "1" from the successive VRB number, operation progresses to Step S123.

In Step S123, it is judged whether or not the interleave operation has been executed for a specified number of times. If not, "1" is added to the interleave count in Step S124, and then the interneave operation resumes. Namely, in Step S123, the interleaver 64 judges whether or not the variable INTCNT is less than a resulted value of subtracting "1" from the interleaver count. If it is judged in Step S123 that the variable INTCNT is less than a resulted value of subtracting "1" from the interleaver count, operation progresses to Step S124, and the counter 63 increments the variable INTCNT by "1". After Step S124, operation progresses to Step S105.

If it is judged in Step S123 that the variable INTCNT is not less than a resulted value of subtracting "1" from the interleaver count, operation progresses to Step S125.

In Step S125 and Step S126, it is checked whether or not the information has already been inserted into all the PRB numbers. Then, for any PRB number having no information, GAP is inserted. When all the PRB numbers have got information inserted, operation quits. For more in details, the interleaver 64 judges in Step S125 whether or not the variable "j" is less than the system bandwidth. If it is judged in Step S125 that the variable "j" is less than the system bandwidth, operation progresses to Step S126, and the interleaver 64 assigns GAP to PRB(j), and then operation returns to Step S125. If it is judged in Step S125 that the variable "j" is not less than the system bandwidth, the operation of converting from the VRBs to the PRBs comes to end.

As described above, through the arithmetical operation according to Formula 9 to Formula 11, executing only add-subtract calculation, shift operation, and comparison makes it possible to obtain a result equivalent to that by performing multiplication, division, and residual calculation, practically without performing those operations. Since there is no need to make preparations of any multiplier, divider, and residual calculator, eventually the scale of circuit can be reduced.

Processing operations at the receiving side are explained above with reference to the flowcharts of FIG. 5 and FIG. 6. The processing operations described above may also be applied to calculations for mapping the VRBs to the PRBs at the transmitting side as well. In the case of calculations for mapping the VRBs to the PRBs at the transmitting side, the VRB number to which the PDSCH is mapped is already known. Therefore, the calculations of the $RB_{start}$ and $L_{CBRs}$ (the number of allocations) in Step S102 as well as Step S103 can be skipped in FIG. 5.

The series of processing operations described above can be executed by means of hardware measures as well as software measures. For executing the series of processing operations by means of software measures, a program constituting the software is installed from a program recording medium, into either a computer that is built in exclusive-use hardware, or into a general-purpose personal computer, for example, which is able to execute various functions with various kinds of programs installed.

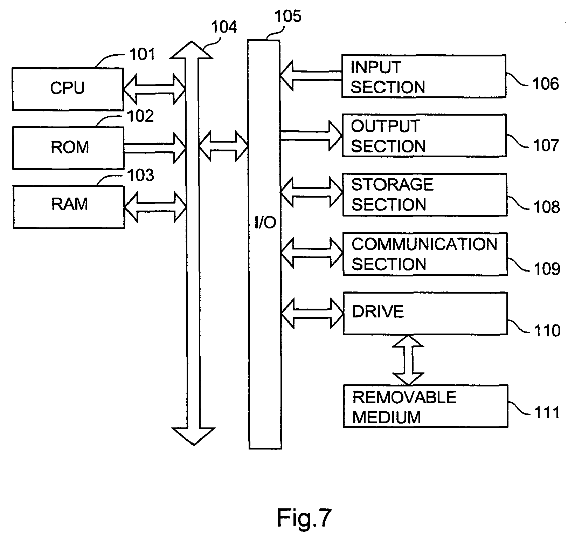

FIG. 7 is a block diagram showing an example of configuration of computer hardware that executes the series of processing operations described above by using a program.

In the computer, interconnected through a bus 104 are a central processing unit (CPU) 101, a read only memory (ROM) 102, and a random access memory (RAM) 103.

Furthermore, an input/output interface (I/O) 105 is connected to the bus 104. Connected to the input/output interface 105 moreover are; an input section 106 including a keyboard, a mouse, a microphone, etc.; an output section 107 including a display, a speaker, and the like; a storage section 108 including a hard disc, a non-volatile memory, and so on; a communicating section 109 including a network interface and so forth; and a drive 110 that drives a removable medium 111, such as a magnetic disc, an optical disc, a magnetic optical disc, a semiconductor memory, and the like.

In the case of a computer configured as described above, the CPU 101 loads a program, stored e.g., in the storage section 108, into the RAM 103, through the input/output interface 105 and the bus 104 in order to execute the program for carrying out the series of processing operations described above.

The program to be executed by the computer (CPU101) is supplied; being recorded in the removable medium 111 as a package medium composed of, for example, a magnetic disc (including a flexible disc), an optical disc (a CD-ROM (compact disc-read only memory), a DVD, and the like), a magnetic optical disc, a semiconductor memory, and so on; or supplied by the intermediary of a wired or wireless transmission medium, such as a local area network, the internet, a digital satellite broad cast, and so forth.

Then, the program can be installed in the computer, being stored in the storage section 108 through the input/output interface 105 while the removable medium 111 being loaded onto the drive 110. The program can also be installed in the computer; being received by the communicating section 109 through a wired or wireless transmission medium, and stored in the storage section 108. Furthermore, the program can also be installed through being stored in the ROM 102 or the storage section 108 in advance.

Incidentally, the program to be executed by the computer may be either a program in which processing operations are carried out chronologically in due order as described in this specification document, or any other program in which processing operations are executed in parallel, or at time of being called and the like, as required.

Furthermore, a scope of application of the embodiment of the present invention is not limited only to the embodiment described above, and various other variations may be made without departing from the concept of the present invention.

[Reference Numerals]

10: Cell station, 11: Encoder, 12: Modulator, 13: Digital/analogue converter, 14: Antenna, 20: Mobile station, 21: Analodue/digital converter, 22: Demodulator, 23: Decoder, 24: Antenna, 40: Demodulation controller, 41: Mapping point detecting section, 42: Data input/output section, 43: Channel estimating section, 44: Pre-coding section, 45: Likelihood calculating section, 61: Mapping point detection controller, 62: Parameter calculating section, 63: Counter, 64: Interleaver, 65: Mapping point specifying section, 66: Mapping point information supplying section, 101: CPU, 102: ROM, 103: RAM, 108: Storage section, 109: Communicating section, 110: Drive, 111: Removable medium.

**Claims**

1. A communication device for resource allocation complying with 3rd Generation Partnership Project (3GPP), comprising:

   calculating means for calculating parameters with respect to specifying resource blocks (RB) to which a physical downlink shared channel (PDSCH) is mapped; and
   converting means for converting a virtual resource block (VRB) number to a physical resource block (PRB) number only by add-subtract calculation, shift operation, and comparison with reference to the parameters calculated.

2. The communication device according to claim 1:

   wherein the calculating means calculates a resource block (RB) gap value, a VRB count, a successive VRB number, an interleaver count, and the number of rows of an interleave matrix; and
   the converting means converts VRB numbers to PRB numbers by applying only add-subtract calculation, shift operation, and comparison calculation onto the RB gap value, the VRB count, the successive VRB number, the interleaver count, and the number of rows of the interleave matrix.

3. A communication method of a communication device for resource allocation complying with 3GPP, comprising:

   a calculation step for calculating parameters with respect to specifying RBs to which a PDSCH is mapped; and
   a conversion step for converting VRB numbers to PRB numbers only by add-subtract calculation, shift operation, and comparison with reference to the parameters calculated.

4. A program for having a computer control a communication device for resource allocation complying with 3GPP, comprising:

   a calculation step for calculating parameters with respect to specifying RBs to which a PDSCH is mapped; and
   a conversion step for converting VRB numbers to PRB numbers only by add-subtract calculation, shift operation, and comparison with reference to the parameters calculated.

Fig.1

EP 2 355 397 A2

Fig.2

WRITE →

READ ↓

| 0 | 1 | 2 | 3 |
|----|------|----|------|
| 4 | 5 | 6 | 7 |
| 8 | 9 | 10 | 11 |
| 12 | NULL | 13 | NULL |

Fig.3

| PRB NUMBER | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| VRB NUMBER | 0 | 4 | 8 | 12 | 1 | 5 | 9 | GAP | 2 | 6 | 10 | 13 | 3 | 7 | 11 |

Fig.4

Fig.5

Fig.6

Fig.7